# EUROPÄISCHE PATENTSCHRIFT

(11) **EP 2 870 188 B1**
(45) Veröffentlichungstag und Bekanntmachung des Hinweises auf die Patenterteilung: **24.08.2016**
(21) Anmeldenummer: 13730273.3
(22) Anmeldetag: 21.06.2013
(51) Int. Cl.: C08G 18/10, C08G 18/12, C08G 18/48, C08G 18/80

(54) **HERSTELLUNG VON SCHAUMSTOFFEN MIT VERBESSERTEN EIGENSCHAFTEN**
PRODUCTION OF FOAMS HAVING IMPROVED PROPERTIES
PRÉPARATION DE MATÉRIAUX EXPANSÉS À PROPRIÉTÉS AMÉLIORÉES

(30) Priorität: 04.07.2012 EP 12174938; 07.09.2012 EP 12183484
(43) Veröffentlichungstag der Anmeldung: 13.05.2015
(73) Patentinhaber: BASF SE, 67056 Ludwigshafen am Rhein (DE)
(72) Erfinder: GRIESER-SCHMITZ, Christof, 49088 Osnabrück (DE); TOMASI, Gianpaolo, 49356 Diepholz (DE); WINDELER, Ludwig, 49448 Marl (DE); POPOV, Alex, 49448 Lemförde (DE); ELLERSIEK, Carsten, 49525 Lengerich (DE); HALWE-BOMMELMANN, Annika, 32369 Rahden-Varl (DE)
(86) Internationale Anmeldenummer: PCT/EP2013/063049
(87) Internationale Veröffentlichungsnummer: WO 2014/005863

(56) Entgegenhaltungen:
- EP-A1- 0 721 963
- EP-A2- 0 445 411
- EP-A2- 0 462 438
- DE-A1- 19 610 262
- US-A- 5 034 425
- US-A1- 2004 014 828

## Beschreibung

Die vorliegende Erfindung betrifft eine Zusammensetzung zur Herstellung eines Polyurethan-Hartschaumstoffes, enthaltend mindestens ein Polyol mit einem Molekulargewicht von mindestens 1700 g/mol und mindestens ein Treibmittel als Komponente A und mindestens ein Polyisocyanat als Komponente B, wobei das mindestens eine Polyisocyanat B 11 bis 39,5 Gew.-% eines Polyisocyanat-Prepolymers, basierend auf einem Polyetherpolyol mit einer OH-Zahl von wenigstens 100 mg KOH/g, enthält, einen Polyurethan-Hartschaumstoff, erhältlich durch Umsetzung dieser Zusammensetzung, ein Verfahren zur Herstellung eines solchen Polyurethan-Hartschaumstoffes, die Verwendung eines solchen Polyurethan-Hartschaumstoffes zur Dämmung, insbesondere zur Rohrdämmung, ein gedämmtes Rohr, enthaltend einen Polyurethan-Hartschaumstoff, sowie ein Verfahren zur Herstellung eines gedämmten Rohres. Zusammensetzungen zur Herstellung eines Polyurethan-Schaumstoffes sowie entsprechende Schaumstoffe sind aus dem Stand der Technik bereits bekannt.

WO 01/18087 A1 offenbart eine Polyol-Zusammensetzung enthaltend eine spezielle Mischung von verschiedenen Polyolen zur Herstellung von halbflexiblen Polyurethan-Hartschaumstoffen. Als Polyisocyanat-Komponente können in diesen Polyurethan-Schaumstoffen die allgemein bekannten Polyisocyanate wie 2,4-Toluendiisocyanat, 4,4'-Diphenylmethandiisocyanat und polymeres 4,4'-Diphenylmethandiisocyanat, sowie Isomere und Mischungen davon eingesetzt werden.

EP 0 906 354 B2 offenbart ein Verfahren zur Herstellung von Polyurethan-Hartschaumstoffen durch Umsetzung von Polyisocyanaten mit Isocyanat-reaktiven Verbindungen. Als entsprechende Isocyanat-reaktive Komponente können verschiedene Polyole basierend auf mehrwertigen Alkoholen und/oder Aminen eingesetzt werden. Als Polyisocyanat-Komponente können ebenfalls die üblichen Polyisocyanate wie Diphenylmethandiisocyanate eingesetzt werden.

DE 698 03 793 T2 offenbart Polyolformulierungen zur Herstellung von Polyurethan-Schaumstoffen. Die Polyolformulierungen gemäß diesem Dokument enthalten eine spezifische Mischung von zwei unterschiedlichen Polyolen, die sich u. a. durch ihr Molekulargewicht unterscheiden. Als Polyisocyanat-Komponente, die mit dieser Polyolmischung zu Polyurethan-Hartschaumstoffen umgesetzt werden kann, werden die bekannten Polyisocyanate wie 2,4-Toluendiisocyanat, 4,4'-Diphenylmethandiisocyanat und polymeres 4,4'-Diphenylmethandiisocyanat, sowie Isomere und Mischungen davon, eingesetzt.

EP 0 320 134 A1 offenbart Polyisocyanat-Zusammensetzungen zur Herstellung von Polyurethan-Schaumstoffen. Die spezielle Polyisocyanat-Zusammensetzung enthält 3 bis 27 Gew.-% eines Prepolymers von Diphenylmethandiisocyanat und einer Verbindung enthaltend wenigstens zwei Isocyanat-reaktive Gruppen mit einem Molekulargewicht unterhalb von 1000 g/mol.

DE 101 08 443 A1 offenbart einen Druckbehälter enthaltend Umsetzungsprodukte zur Herstellung eines elastischen Schaumstoffes. Das Umsetzungsprodukt umfasst wenigstens ein Isocyanat und eine Mischung von Polyetherpolyolen. Als geeignete Isocyanat-Komponente werden übliche Isocyanate wie 2,4-Toluendiisocyanat, 4,4'-Diphenylmethandiisocyanat und polymeres 4,4'-Diphenylmethandiisocyanat, sowie Isomere und Mischungen davon, sowie Umsetzungsprodukte von mindestens einer gegenüber Isocyanat reaktiven Verbindung mit mindestens einem Di- und/oder Polyisocyanat, so genannte Prepolymere, offenbart. In der genannten Schrift wird jedoch ein Polyurethan-Weichschaumstoff und kein -Hartschaumstoff offenbart.

DE 196 10 262 A1 offenbart ein Verfahren zur Herstellung von Kohlenwasserstoff-getriebenen Polyurethan-Hartschaumstoffen. Dazu wird eine Zusammensetzung enthaltend Polyole und Polyisocyanate sowie Treibmittel zur Reaktion gebracht und aufgeschäumt. Die Polyolkomponente enthält 60 bis 100% von mindestens zwei Hydroxylgruppen aufweisenden Polyethern und/oder Polyestern mit einem Molekulargewicht von 250 bis 1500 g/mol, sowie iso- und/oder n-Pentan als Treibmittel.

US 5,034,425 offenbart einen Polyurethan-Hartschaumstoff hergestellt durch Umsetzen einer speziellen Polyol-Komponente mit einer Isocyanat-Komponente in Gegenwart eines Treibmittels enthaltend Wasser in einer Menge von 2-3,5 Gew.-% pro 100 Gew.-% der Polyol-Komponente.

EP 0 462 438 A2 offenbart ein Verfahren zur Herstellung von im Wesentlichen geschlossenzelligen Urethan-, Harnstoff- und Biuret-Gruppen aufweisenden Hartschaumstoffen mit hervorragender Haftung an festen Oberflächen und deren Verwendung. Dazu werden endständige NCO-Gruppen aufweisende Prepolymere, die Umsetzungsprodukte von a Gew.-Teilen eines mindestens difunktionellen Polyols mit b Gew.-Teilen eines mindestens difunktionellen Polyisocyanats sind, wobei das Verhältnis a : b mindestens 1:10 beträgt, und die OH-Zahl des mindestens difunktionellen Polyols < 100 ist, mit Verbindungen mit mindestens zwei gegenüber Isocyanaten reaktionsfähigen Wasserstoffatomen mit einem Molekulargewicht von 400 bis 10.000 umgesetzt.

EP 0 445 411 A2 offenbart ein Verfahren zur Herstellung von im Wesentlichen geschlossenzelligen Urethan-, Harnstoff- und/oder Biuret-Gruppen aufweisenden Hartschaumstoffen und deren Verwendung. Zur Herstellung wird ein Gemisch enthaltend organische Polyisocyanate, höhermolekulare Polyole, Wasser, Kettenverlängerungs- und/oder Vernetzungsmittel sowie Katalysatoren umgesetzt, wobei als höhermolekulares Polyol Mischungen aus mindestens zwei Hydroxylgruppen aufweisenden Polyestern einer OH-Zahl > 150 und/oder mindestens zwei Hydroxylgruppen aufweisenden Polyethern einer OH-Zahl > 200 und mindestens zwei Hydroxylgruppen aufweisenden Ethylenoxid-haltigen Polyethern einer OH-Zahl > 100 verwendet werden.

US 2004/0014828 A1 offenbart ein Verfahren zur Herstellung von geschlossenzelligen Polyurethan-Hartschaumstoffen mit verbesserten mechanischen Eigenschaften. Dazu wird eine Mischung enthaltend wenigstens ein polymeres Polyol, wenigstens ein Polyol mit einer OH-Zahl von 200 bis ungefähr 800 und wenigstens ein Polyol mit einer OH-Zahl von 25 bis ungefähr 115, mit wenigstens einem polymeren Isocyanat und/oder einem Polymer davon umgesetzt.

Die aus dem Stand der Technik bekannten Polyurethan-Hartschaumstoffe sind bezüglich ihrer Flexibilität noch verbesserungsbedürftig. Bei der bevorzugt kontinuierlichen Herstellung von gedämmten Rohren ist es notwendig, die hergestellten Rohre auf Rollen aufzuwickeln, um sie für den Transport vorzubereiten. Während des Aufwickelns muss der als Dämmung eingesetzte Polyurethan-Hartschaumstoff genügend flexibel sein, um nicht zu brechen.

Aufgabe der vorliegenden Erfindung ist es daher, einen Polyurethan-Hartschaumstoff mit besonders guten Dämmeigenschaften und einer genügend hoher Flexibilität bereitzustellen, die es erlaubt, kontinuierlich hergestellte gedämmte Rohre kontinuierlich aufzuwickeln. Aufgabe der vorliegenden Erfindung ist es daher insbesondere, eine Zusammensetzung zur Herstellung entsprechender Polyurethan-Hartschaumstoffe, entsprechende Polyurethan-Hartschaumstoffe, ein Verfahren zur ihrer Herstellung sowie die Verwendung der hergestellten PolyurethanHartschaumstoffe zur Dämmung bereitzustellen.

Diese Aufgaben werden erfindungsgemäß gelöst durch die Zusammensetzung zur Herstellung eines Polyurethan-Hartschaumstoffes, mindestens enthaltend:
(A) mindestens ein Polyol mit einem Molekulargewicht von mindestens 1700 g/mol und mindestens ein Treibmittel als Komponente A und
(B) mindestens ein Polyisocyanat als Komponente B,
wobei das mindestens eine Polyisocyanat B 11 bis 39,5 Gew.-% eines PolyisocyanatPrepolymers, basierend auf wenigstens einem Polyetherpolyol mit einer OH-Zahl von wenigstens 100 mg KOH/g, enthält.

Die vorliegende Erfindung betrifft eine Zusammensetzung zur Herstellung eines Polyurethan-Hartschaumstoffes. Der Begriff Polyurethan-Hartschaumstoff betrifft erfindungsgemäß einen Schaumstoff, der wenigstens ein Polyurethan enthält, weiter bevorzugt besteht der erfindungsgemäße Polyurethan-Hartschaumstoff aus Polyurethan.

Der Begriff "Hartschaumstoff' ist dem Fachmann an sich bekannt und beschreibt im Allgemeinen Schaumstoffe mit engmaschig vernetzten, starren Polymerstrukturen. Hartschaumstoffe sind geschlossenzellige Schaumstoffe mit diskreten, durch die Polymermatrix voneinander getrennten, Schaumzellen. Sie zeichnen sich durch gutes Wärmedämmvermögen aus.

Der erfindungsgemäße Polyurethan-Hartschaumstoff weist bevorzugt eine Druckspannung bei 10 % Stauchung von größer gleich 50 kPa, besonders bevorzugt größer gleich 100 kPa, ganz besonders bevorzugt größer gleich 150 kPa auf. Weiterhin verfügt der erfindungsgemäße Polyurethan-Hartschaumstoff nach DIN ISO 4590 bevorzugt über eine Geschlossenzelligkeit von mindestens 70 %, besonders bevorzugt größer 85 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6. Für Polyurethan-Schaumstoffe kann auch auf DIN 7726 verwiesen werden.

Die einzelnen Komponenten der erfindungsgemäßen Zusammensetzung werden im Folgenden detailliert erläutert:

### Komponente A:

Die erfindungsgemäße Zusammensetzung zur Herstellung eines PolyurethanHartschaumstoffes enthält als Komponente A mindestens ein Polyol mit einem Molekulargewicht von mindestens 1700 g/mol und mindestens ein Treibmittel.

Im Allgemeinen können erfindungsgemäß alle Polyole eingesetzt werden, die zur Herstellung eines Polyurethan-Hartschaumstoffes geeignet sind. Erfindungsgemäß wird mindestens ein Polyol mit einem Molekulargewicht von mindestens 1700 g/mol, bevorzugt mindestens 2500 g/mol, besonders bevorzugt mindestens 4000 g/mol, beispielsweise 4350 g/mol, eingesetzt. Eine obere Grenze für das Molekulargewicht für das mindestens eine Polyol ist im Allgemeinen 8000 g/mol, bevorzugt 7000 g/mol, besonders bevorzugt 6000 g/mol.

Erfindungsgemäß kommen als Polyole im Allgemeinen Verbindungen mit mindestens zwei gegenüber Isocyanat reaktiven Gruppen, das heißt mit mindestens zwei mit Isocyanatgruppen reaktiven Wasserstoffatomen, in Betracht. Beispiele hierfür sind Verbindungen mit OH-Gruppen, SH-Gruppen, NH-Gruppen und/oder NH₂-Gruppen.

Als Polyole kommen erfindungsgemäß bevorzugt Verbindungen auf Basis von Polyesterolen oder Polyetherolen, bevorzugt Polyetherolen, zum Einsatz. Die Funktionalität der Polyetherole und/oder Polyesterole beträgt im Allgemeinen 1,5 bis 8, bevorzugt 1,7 bis 7, besonders bevorzugt 1,9 bis 6.

Die Polyole weisen eine Hydroxylzahl (OH-Zahl) von im Allgemeinen größer als 10 mg KOH/g, bevorzugt größer als 15 mg KOH/g, besonders bevorzugt größer als 20 mg KOH/g auf. Als Obergrenze der Hydroxylzahl hat sich im Allgemeinen 1000 mg KOH/g, bevorzugt 900 mg KOH/g, besonders 700 mg KOH/g, bewährt.

Erfindungsgemäß bevorzugt wird als das in Komponente A vorliegende mindestens eine Polyol eine Mischung von Polyolen eingesetzt, beispielsweise enthaltend zwei, drei, vier oder mehr verschiedene Polyole, beispielsweise Poletherole und/oder Polyesterole, bevorzugt Polyetherole.

Für den erfindungsgemäß bevorzugten Fall, dass eine Polyolmischung eingesetzt wird, beziehen sich die oben angegebenen OH-Zahlen auf die Gesamtheit der Polyolmischung, was nicht ausschließt, dass einzelne Bestandteile der Mischung höhere oder niedrigere Werte aufweisen. Es ist beispielsweise erfindungsgemäß bevorzugt, dass mindestens ein Polyol in der Mischung vorliegt, dass eine Hydroxylzahl von 10 bis 80 mg KOH/g, bevorzugt 15 bis 60 mg KOH/g, aufweist.

Bevorzugt enthält Komponente A Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Starterverbindungen für die in der erfindungsgemäßen Zusammensetzung vorliegenden Polyole kommen Alkohole, Zuckerverbindungen, Amine, Kondensationsprodukte aus wenigstens einem Amin, wenigstens einer aromatischen Verbindung und Formaldehyd, und Mischungen davon, in Betracht.

Die vorliegende Erfindung betrifft daher bevorzugt die erfindungsgemäße Zusammensetzung, wobei Komponente A mindestens ein Polyol enthält, dass auf einer Verbindung ausgewählt aus der Gruppe bestehend aus Alkoholen, Zuckerverbindungen, Aminen, Kondensationsprodukten aus wenigstens einem Amin, wenigstens einer aromatischen Verbindung und Formaldehyd, und Mischungen davon, basiert.

Als Startermoleküle kommen Alkohole in Betracht, wie beispielsweise Glycerin, Trimethylolpropan (TMP), Pentaerythrit, Diethylenglykol, Zuckerverbindungen, wie beispielsweise Saccharose, Sorbit, sowie Amine, wie beispielsweise Methylamin, Ethylamin, Isopropylamin, Butylamin, Benzylamin, Anilin, Toluidin, Toluylendiamin (TDA), Naphtylenamin, Ethylendiamin (EDA), Diethylentriamin, 4,4'-Methylendianilin, 1,3,-Propandiamin, 1,6-Hexandiamin, Ethanolamin, Diethanolamin, Triethanolamin und Ähnliche.

Weiterhin können als Startermoleküle Kondensationsprodukte aus wenigstens einem Amin, wenigstens einer aromatischen Verbindung und Formaldehyd, insbesondere Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden.

Ganz besonders bevorzugt werden Startermoleküle ausgewählt aus der Gruppe bestehend aus Glycerin, Toluylendiamin (TDA), Saccharose, Pentaerythrit, Diethylenglykol, Trimethylolpropan (TMP), Ethylendiamin, Sorbit und Mischungen davon, eingesetzt.

Besonders bevorzugt enthält Komponente A der erfindungsgemäßen Zusammensetzung eine Mischung aus mindestens zwei Polyolen, ganz besonders bevorzugt aus drei Polyolen, insbesondere Polyetherolen.

In einer besonders bevorzugten Ausführungsform enthält Komponente A der erfindungsgemäßen Zusammensetzung zwei unterschiedliche Polyetherole a1 und a2.

Die vorliegende Erfindung betrifft daher besonders bevorzugt die erfindungsgemäße Zusammensetzung, wobei in Komponente A eine Polyetherolmischung vorliegt, enthaltend mindestens ein Polyetherol a1 basierend auf mindestens einem dreiwertigen Alkholol, insbesondere Glycerin, und mindestens ein Polyetherol a2 basierend auf mindestens einem Amin, insbesondere Toluylendiamin (TDA). In einer weiteren besonders bevorzugten Ausführungsform enthält Komponente A der erfindungsgemäßen Zusammensetzung drei unterschiedliche Polyetherole a1, a2 und a3.

Die vorliegende Erfindung betrifft daher in einer weiteren besonders bevorzugten Ausführungsform die erfindungsgemäße Zusammensetzung, wobei in Komponente A eine Polyetherolmischung vorliegt, enthaltend mindestens ein Polyetherol a1 basierend auf mindestens einem dreiwertigen Alkholol, insbesondere Glycerin, mindestens ein Polyetherol a2 basierend auf mindestens einem Amin, insbesondere Toluylendiamin (TDA), und mindestens ein Polyetherol a3 basierend auf mindestens einer Zuckerverbindung, insbesondere basierend auf einer Mischung enthaltend Saccharose, Pentaerythrit und Diethylenglykol.

Das bevorzugt eingesetzte Polyetherol a1 basiert auf mindestens einem dreiwertigen Alkohol, insbesondere Glycerin.

Weiter bevorzugt wird das Polyetherol a1 alkoxyliert mit mindestens einem Alkylenoxid, bevorzugt Propylenoxid und/oder Ethylenoxid, bevorzugt mit Propylenoxid und Ethylenoxid.

Erfindungsgemäß bevorzugt weist das Polyetherol a1 ein Molekulargewicht von mindestens 1700 g/mol auf. Das Molekulargewicht des Polyetherols a1 ist beispielsweise 1700 bis 8000 g/mol, bevorzugt 2200 bis 7000 g/mol, besonders bevorzugt 3000 bis 6000 g/mol, beispielsweise 4350 g/mol.

Die Hydroxylzahl (OH-Zahl) des Polyetherols a1 ist beispielsweise 10 bis 80 mg KOH/g, bevorzugt 15 bis 60 mg KOH/g, besonders bevorzugt 25 bis 45 mg KOH/g.

Die Funktionalität des Polyetherols a1 ist beispielsweise 1,5 bis 6, bevorzugt 1,7 bis 5, besonders bevorzugt 1,9 bis 4,5.

Das bevorzugte Polyetherpolyol a1 kann nach dem Fachmann bekannten und oben genannten Verfahren hergestellt werden.

Das bevorzugt eingesetzte Polyetherol a2 basiert auf mindestens einem Amin, insbesondere Toluylendiamin (TDA).

Weiter bevorzugt wird das Polyetherol a2 alkoxyliert mit mindestens einem Alkylenoxid, bevorzugt Propylenoxid und/oder Ethylenoxid, bevorzugt mit Propylenoxid und Ethylenoxid.

Das Molekulargewicht des Polyetherols a2 ist beispielsweise 200 bis 2000 g/mol, bevorzugt 250 bis 1500 g/mol, besonders bevorzugt 300 bis 1000 g/mol, beispielsweise 530 g/mol.

Die Hydroxylzahl (OH-Zahl) des Polyetherols a2 ist beispielsweise 100 bis 600 mg KOH/g, bevorzugt 120 bis 500 mg KOH/g, besonders bevorzugt 150 bis 450 mg KOH/g.

Die Funktionalität des Polyetherols a2 ist beispielsweise 2,0 bis 5,0, bevorzugt 2,5 bis 4,5, besonders bevorzugt 3,0 bis 4,2.

Das bevorzugte Polyetherpolyol a2 kann nach dem Fachmann bekannten und oben genannten Verfahren hergestellt werden.

Das bevorzugt eingesetzte Polyetherol a3 basiert bevorzugt auf eine Mischung enthaltend Saccharose, Pentaerythrit, Diethylenglykol.

Weiter bevorzugt wird das Polyetherol a3 alkoxyliert mit mindestens einem Alkylenoxid, bevorzugt Propylenoxid und/oder Ethylenoxid, bevorzugt mit Propylenoxid.

Das Molekulargewicht des Polyetherols a3 ist beispielsweise 200 bis 2000 g/mol, bevorzugt 300 bis 1500 g/mol, besonders bevorzugt 400 bis 1000 g/mol, beispielsweise 545 g/mol.

Die Hydroxylzahl (OH-Zahl) des Polyetherols a3 ist beispielsweise 100 bis 600 mg KOH/g, bevorzugt 200 bis 500 mg KOH/g, besonders bevorzugt 300 bis 450 mg KOH/g.

Die Funktionalität des Polyetherols a3 ist beispielsweise 2,0 bis 6,0, bevorzugt 2,5 bis 5,5, besonders bevorzugt 3,0 bis 5,2.

Das bevorzugte Polyetherpolyol a3 kann nach dem Fachmann bekannten und oben genannten Verfahren hergestellt werden.

In der erfindungsgemäß bevorzugt eingesetzten Mischung der genannten Polyetherpolyole a1, a2 und a3 liegt Polyetherpolyol a1 beispielsweise in einer Menge von 30 bis 60 Gew.-%, bevorzugt 35 bis 50 Gew.-%, besonders bevorzugt 38 bis 45 Gew.-%, jeweils bezogen auf die Mischung enthaltend a1, a2 und a3, vor.

In der erfindungsgemäß bevorzugt eingesetzten Mischung der genannten Polyetherpolyole a1, a2 und a3 liegt Polyetherpolyol a2 beispielsweise in einer Menge von 10 bis 40 Gew.-%, bevorzugt 20 bis 40 Gew.-%, besonders bevorzugt 25 bis 35 Gew.-%, jeweils bezogen auf die Mischung enthaltend a1, a2 und a3, vor.

In der erfindungsgemäß bevorzugt eingesetzten Mischung der genannten Polyetherpolyole a1, a2 und a3 liegt Polyetherpolyol a3 beispielsweise in einer Menge von 10 bis 40 Gew.-%, bevorzugt 20 bis 40 Gew.-%, besonders bevorzugt 22 bis 35 Gew.-%, jeweils bezogen auf die Mischung enthaltend a1, a2 und a3, vor.

Die Summe der Mengen an a1, a2, a3 und gegebenenfalls vorliegendem Stabilisator und/oder Wasser ergibt erfindungsgemäß 100 Gew.-%.

In einer weiteren bevorzugten Ausführungsform der vorliegenden Erfindung liegt in Komponente A der erfindungsgemäßen Zusammensetzung mindestens ein Additiv ausgewählt aus der Gruppe bestehend aus Kettenverlängerungsmitteln, Stabilisatoren, Wasser, Katalysatoren, oberflächenaktiven Substanzen, Schaumstabilisatoren, Zellreglern, Füllstoffen, Farbstoffen, Pigmenten, Flammschutzmitteln, Antistatika, Hydrolyseschutzmitteln und/oder fungistatisch und bakteriostatisch wirkenden Substanzen und Mischungen davon, vor.

Im Allgemeinen können erfindungsgemäß als Additive alle dem Fachmann bekannten Stoffe eingesetzt werden, die die oben genannten Funktionen erfüllen können.

Erfindungsgemäß gegebenenfalls vorliegende Stabilisatoren fördern die Ausbildung einer regelmäßigen Zellstruktur bei der Schaumbildung.

Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Der mindestens eine Stabilisator wird im Allgemeinen in einer Menge von 0,2 bis 5 Gew.-%, bevorzugt von 0,5 bis 4,0 Gew.-%, jeweils bezogen auf das Gesamtgewicht von mindestens einem Polyol, Stabilisator und gegebenenfalls Wasser, eingesetzt.

Unter erfindungsgemäß gegebenenfalls vorliegenden Kettenverlängerungsmitteln werden im Allgemeinen Verbindungen verstanden, die ein Molekulargewicht von 60 bis 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol.

Gegebenenfalls vorliegende Kettenverlängerungsmittel werden im Allgemeinen in einer Menge von 0 bis 20 Gew.-%, bevorzugt von 2 bis 15 Gew.-%, bezogen auf das Gesamtgewicht des mindestens einen Polyols und gegebenenfalls vorliegendem Stabilisator und/oder Wasser, eingesetzt.

Erfindungsgemäß gegebenenfalls vorliegende Vernetzer dienen beispielweise der Erhöhung der Vernetzungsdichte. Unter Vernetzern werden im Allgemeinen Verbindungen verstanden, die ein Molekulargewicht von 60 bis 400 g/mol aufweisen und mehr als 2, beispielsweise 3, gegenüber Isocyanaten reaktive Wasserstoffatome aufweisen. Ein Beispiel hierfür ist Glycerin.

Gegebenenfalls vorliegende Vernetzer werden im Allgemeinen in einer Menge von 0 bis 20 Gew.-%, bevorzugt von 2 bis 15 Gew.-%, bezogen auf das Gesamtgewicht des mindestens einen Polyols und gegebenenfalls vorliegendem Stabilisator und/oder Wasser, eingesetzt. Gegebenenfalls vorliegende Flammschutzmittel können halogenhaltige oder halogenfreie Flammschutzmittel sein. Bevorzugte halogenfreie Flammschutzmittel sind beispielsweise Ammoniumpolyphosphat, Aluminiumhydroxid, Isocyanuratderivate und Carbonate von Erdalkalimetallen. Vorzugsweise eingesetzt werden Phosphate, wie z.B. Triethylphosphat, Phosphonate, wie z.B. Diethyl-N.N-di(2-hydroxyethyl)amino-methyl-phosphonat, Melamin, Melaminderivate wie z.B. Melamincyanurat und/oder Gemische aus Melamin und Blähgraphit. Natürlich sind auch erfindungsgemäße Schaumstoffe herstellbar, wenn neben den bevorzugt eingesetzten halogenfreien Flammschutzmitteln weitere in der Polyurethanchemie bekannte halogenhaltige Flammschutzmittel verwendet bzw. mitverwendet werden, wie beispielsweise Trikresylphosphat, Tris-(2-chlorethyl)phosphat, Tris-(2-chlorpropyl)phosphat, Tetrakis-(2-chlorethyl)-ethylendi-phosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch weitere anorganische oder organische Flammschutzmittel, wie roter Phosphor, Aliumiumoxidhydrat, Antimontrioxid, Arsenoxid, Calciumsulfat, Maisstärke und/oder gegebenenfalls aromatische Polyester zum Flammschützen der Polyisocyanatpolyadditionsprodukte verwendet werden.

Halogenhaltige Flammschutzmittel sind im Allgemeinen die aus dem Stand der Technik bekannten Flammschutzmittel, beispielsweise bromierte Ether (Ixol), bromierte Alkohole wie Dibromneopentylakohol, Tribromneopentylalkohol und PHT-4-Diol sowie chlorierte Phosphate, wie z. B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat.

Flammschutzmittel werden im Allgemeinen in einer Menge von 0 Gew.-% bis 60 Gew.-%, bevorzugt 0 Gew.-% bis 50 Gew.-%, besonders bevorzugt 0 Gew.-% bis 40 Gew.-%, jeweils bezogen auf das Gesamtgewicht des wenigstens einen Polyols und gegebenenfalls vorliegendem Stabilisator und/oder Wasser, eingesetzt

In einer bevorzugten Ausführungsform enthält Komponente A mindestens einen Katalysator.

Als bevorzugt in Komponente A vorliegende Katalysatoren werden zur Herstellung der Schäume insbesondere Verbindungen verwendet, die die Reaktion der reaktiven Wasserstoffatome, insbesondere hydroxylgruppenenthaltender Verbindungen des mindestens einen Polyols mit dem mindestens einen Polyisocyanats stark beschleunigen.

Als Katalysatoren kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat in Betracht. Die organischen Metallverbindungen können allein oder in Kombination mit stark basischen Aminen eingesetzt werden. Genannt seien beispielsweise Amidine, wie 2,3-Dimethyl-3,4,5,6-tetrahydropyrimidin, tertiäre Amine, die wie Triethylamin, Tri-butylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Bis-(dimethyldiethylaminoethyl)ether, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan, und Aminoalkanolverbindungen, wie Triethanolamin, Triisopropanolamin, N-Methyl- und N-Ethyldiethanolamin und Dimethylethanolamin als Treibkatalysatoren dienen, die neben der Gelreaktion insbesondere die Reaktion des Isocyanates mit dem Wasser favorisieren. Als Gelkatalysator finden Diazabicycloundecan, 1,4-Diazabicyclo-(2,2,2)-octan (Dabco), 1-Methylimidazol und vorzugsweise Dimethylcyclohexylamin Verwendung.

Erfindungsgemäß können auch die Polyisocyanuratreaktion unterstützende allgemein bekannte Katalysatoren (PIR-Katalysator) eingesetzt werden, wobei erfindungsgemäß ein Polyurethan gebildet wird. Beispielsweise werden Alkali- und/oder Erdalkalimetallverbindungen, insbesondere Alkalimetallsalze, wie beispielsweise Kaliumacetat, Kaliumoctoat und Kaliumformiat, verwendet. Vorzugsweise eingesetzt wird Kaliumacetat. Weitere erfindungsgemäß zu verwendende Alkali- und/ oder Erdalkalimetallverbindungen sind u.a. Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. In Frage kommen auch andere bekannte PIR-Katalysatoren, wie Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid.

Besonders bevorzugt wird Dimethylcyclohexylamin als Katalysator eingesetzt.

Der gegebenenfalls vorliegende mindestens eine Katalysator wird im Allgemeinen in einer Menge von 0,1 bis 10 Gew.-%, bevorzugt von 0,5 bis 5 Gew.-%, bezogen auf das Gesamtgewicht des mindestens einen Polyols und gegebenenfalls vorliegendem Stabilisator und/oder Wasser eingesetzt.

Die erfindungsgemäße Zusammensetzung zur Herstellung eines Polyurethan-Hartschaumstoffes enthält als Komponente A neben dem mindestens einen Polyol mit einem Molekulargewicht von mindestens 1700 g/mol auch mindestens ein Treibmittel.

In der erfindungsgemäßen Zusammensetzung können chemische und/oder physikalische Treibmittel vorliegen.

Als chemische Treibmittel sind Wasser oder Carbonsäuren, insbesondere Ameisensäure, bevorzugt. Das chemische Treibmittel wird im Allgemeinen in einer Menge von 0,1 bis 10 Gew.-%, insbesondere von 0,5 bis 7 Gew.-%, bezogen auf das Gesamtgewicht des mindestens einen Polyols und gegebenenfalls vorliegendem Stabilisator und/oder Wasser eingesetzt.

Bevorzugt wird erfindungsgemäß mindestens ein physikalisches Treibmittel eingesetzt. Darunter versteht man Verbindungen, die in der erfindungsgemäßen Zusammensetzung gelöst oder emulgiert sind und unter den Bedingungen der Polyurethanbildung verdampfen. Dabei handelt es sich beispielsweise um Kohlenwasserstoffe, beispielsweise Cyclopentan oder eine Mischung enthaltend Cyclopentan, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht des mindestens einen Polyols und gegebenenfalls vorliegendem Stabilisator und/oder Wasser eingesetzt.

Die vorliegende Erfindung betrifft daher bevorzugt die erfindungsgemäße Zusammensetzung, wobei das Treibmittel Cycylopentan oder eine Mischung enthaltend Cyclopentan ist. Beispielsweise kann erfindungsgemäß eine Mischung von Cyclopentan und Wasser als Treibmittel eingesetzt werden.

### Komponente B:

Die erfindungsgemäße Zusammensetzung enthält als Komponente B mindestens ein Polyisocyanat, wobei das mindestens eine Polyisocyanat B11 bis 39,5 Gew.-% eines Polyisocyanat-Prepolymers basierend auf wenigstens einem Polyetherpolyol mit einer OH-Zahl von wenigstens 100 mg KOH/g, enthält.

Erfindungsgemäß wird unter dem Begriff "Polyisocyanat" eine Verbindung verstanden, die zwei oder mehr Isocyanatgruppen aufweist. Als organische Polyisocyanate kommen beispielsweise aliphatische, cycloaliphatische und insbesondere aromatische Di- oder Polyisocyanate in Betracht. Im einzelnen seien beispielhaft genannt: aliphatische Diisocyanate, wie Hexamethylendiisocyanat-1,6, 2-Methyl-pentamethylen-diisocyanat-1,5, 2-Ethyl-butylen-diisocyanat-1,4 oder Mischungen aus mindestens 2 der genannten C6-Alkylendiisocyanate, Pentamethylendiisocyanat-1,5 und Butylen-diisocyanat-1,4, cycloaliphatische Diisocyanate, wie 1-Isocyanato3,3,5-trimethyl-5-isocyanatomethyl-cyclohexan (Isophorondiisocyanat), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 1,5-Naphtylen-diisocyanat (1,5-NDI), 2,4- und 2,6-Toluylen-diisocyanat (TDI) sowie deren Gemische, 2,4'-, 2,2'-, und vorzugsweise 4,4'-Diphenylmethan-diisocyanat (mMDI) sowie Mischungen aus mindestens zwei dieser Isomere, Polyphenyl-polymethylen-polyisocyanate (Polymer-MDI, pMDI) mit zwei oder mehr aromatischen Systemen, Mischungen aus 2,4'-, 2,2'- und 4,4'-Diphenylmethandiisocyanaten und Polyphenyl-polymethylen-polyisocyanaten (Roh-MDI), Mischungen aus RohMDI und Toluylen-Diisocyanaten, Polyphenyl-Polyisocyanate, carbodiimid modifizierte flüssige 4,4'- und/oder 2,4-Diphenylmethan-diisocyanate und 4,4'-Diisocyanato-diphenylethan-(1,2). Verwendung finden besonders bevorzugt Isocyanate, die bei einer Temperatur von 25 °C in flüssiger Form vorliegen.

Erfindungswesentlich ist, dass die Polyisocyanatkomponente B 11 bis 39,5 Gew.-%, bevorzugt 12 bis 35 Gew.-%, besonders bevorzugt 12,5 bis 33 Gew.-% eines Polyisocyanat-Prepolymers, basierend auf wenigstens einem Polyetherpolyol mit einer OH-Zahl von wenigstens 100 mg KOH/g, enthält.

Polyisocyanat-Prepolymere an sich sind aus dem Stand der Technik bekannt. Ihre Herstellung erfolgt auf bekannte Weise, indem vorstehend beschriebene Polyisocyanate, beispielsweise bei Temperaturen von etwa 80 °C, mit Verbindungen mit gegenüber Isocyanaten reaktiven Wasserstoffatomen, bevorzugt mit Polyolen, zu Polyisocyanat-Prepolymeren umgesetzt werden. Das Polyol-Polyisocyanat-Verhältnis wird dabei bevorzugt so gewählt, dass der NCO-Gehalt des Prepolymeren 8 bis 35%, vorzugsweise 15 bis 30%, besonders bevorzugt 20 bis 30% beträgt.

Als Polyole für die Herstellung der Polyisocyanat-Prepolymere können im Prinzip die oben bezüglich Komponente A genannten Polyole, d. h. Polyetherpolyole mit einer OH-Zahl von wenigstens 100 mg KOH/g, verwendet werden. Zur Herstellung der erfindungsgemäß eingesetzten Prepolymere werden beispielsweise Polyetherpolyole, basierend auf Glycerin als Starterverbindung, alkoxyliert mit Ethylenoxid und/oder Propylenoxid eingesetzt. Bevorzugt werden zur Herstellung der Polyisocyanat-Prepolymeren Dipropylenglykol und/oder Polypropylenglykol eingesetzt.

Erfindungsgemäß werden in der Komponente B Polyetherpolyole mit einer OH-Zahl von wenigstens 100 mg KOH/g, verwendet. bevorzugt ist die Hydroxylzahl (OH-Zahl) der Polyetherpolyote beispielsweise 100 bis 600 mg KOH/g, bevorzugt 150 bis 500 mg KOH/g, besonders bevorzugt 200 bis 450 mg KOH/g.

Die Funktionalität des in Komponenten B eingesetzten Polyetherols ist beispielsweise 1,5 bis 6, bevorzugt 1,7 bis 5, besonders bevorzugt 1,9 bis 4,5.

In einer weiteren Ausführungsform werden als Polyole für die Herstellung der PolyisocyanatPrepolymere können im Prinzip die oben bezüglich Komponente A genannten Polyole, d. h. Polyetherole und/oder Polyesterale, verwendet werden. Zur Herstellung der erfindungsgemäß bevorzugten Prepolymere werden diese Polyetherole mit entsprechenden Di- und/oder Polyisocyanaten umgesetzt. Bevorzugt werden dazu 4,4'-mMDI, pMDI oder Mischung davon mit einem entsprechenden Polyol, bevorzugt mit einem Polypropylenglykol, umgesetzt.

Erfindungsgemäß bevorzugt eingesetzte Polyisocyanat-Prepolymere weisen eine Funktionalität von beispielsweise 1,0 bis 4,0, bevorzugt 2,0 bis 3,0. auf.

In einer weiteren erfindungsgemäß bevorzugten Ausführungsform wird als Komponente B eine Mischung von mindestens einem Polyisocyanat-Prepolymeren und mindestens einem Polyisocyanat mit dem oben genannten Gehalt an Prepolymer eingesetzt. Bevorzugte Mischungen enthalten beispielsweis neben dem Polyisocyanat-Prepolymeren pMDI und/oder mMDI.

In einer ganz besonders bevorzugten Ausführungsform der vorliegenden Erfindung wird als Komponente B ein Prepolymer aus 4,4' mMDI, Dipropylenglykol und Polypropylenglykol (OH-Zahl 250 mg KOH/g), mit einem NCO-Gehalt von 22,9% und einer mittlere Funktionalität von 2,05; der Gehalt an Prepolymer ist 31%,
oder
ein Prepolymer aus 4,4' mMDI, pMDI und Polypropylenglykol (OH-Zahl 250 mg KOH/g) mit einem NCO-Gehalt von 28,5% und einer mittleren Funktionalität von 2,4; der Gehalt an Prepolymer ist 13%,
eingesetzt,
gegebenenfalls auch in Mischung mit weiteren Polyisocyanaten, wie
einer Mischung von 4,4'-Diphenylmethandiisocyanat mit höherfunktionellen Oligomeren und Isomeren, mit einem NCO-Gehalt von 31,5% und einer mittleren Funktionalität von ca. 2,7
oder
einem carbodiimid modifizierten 4,4' mMDI, mit einem NCO-Gehalt von 29,5% und einer mittleren Funktionalität von 2,2.Die erfindungsgemäße Zusammensetzung enthält die Komponenten A und B im Allgemeinen in solchen Mengen, dass der Isocyanat-Index im Allgemeinen 50 bis 175, bevorzugt 80 bis 160, besonders bevorzugt 100 bis 150, beispielsweise 120 ± 1, beträgt.

Die vorliegende Erfindung betrifft auch einen Polyurethan-Hartschaumstoff, erhältlich durch Umsetzung der erfindungsgemäßen Zusammensetzung.

Die vorliegende Erfindung betrifft auch ein Verfahren zur Herstellung eines erfindungsgemäßen Polyurethan-Hartschaumstoffes aus einer erfindungsgemäßen Zusammensetzung, umfassend mindestens die Schritte:
(1) Inkontaktbringen der Komponenten A und B, um ein Reaktionsprodukt zu erhalten, und
(2) Aufschäumen des in Schritt (1) erhaltenen Reaktionsproduktes.

Erfindungsgemäß bevorzugt und für den Fachmann bekannt finden die Schritte (1) und (2) gleichzeitig statt, d. h. während die Komponenten A und B miteinander reagieren, schäumt das gebildete Reaktionsprodukt auf. Es ist auch möglich, dass nach beendeter Reaktion das Reaktionsprodukt noch zusätzlich weiter aufschäumt.

Die erfindungsgemäßen Hart-Schaumstoffe werden vorteilhafterweise nach dem one-shot-Verfahren, beispielsweise mit Hilfe der Hochdruck- oder Niederdruck-Technik hergestellt. Als besonders vorteilhaft hat es sich erwiesen, nach dem Zweikomponentenverfahren zu arbeiten und die Komponenten A und B in Kontakt zu bringen (Schritt (1)).

Die Komponenten A und B werden üblicherweise bei einer Temperatur von 15 bis 80 °C, vorzugsweise von 20 bis 60 °C und insbesondere von 20 bis 35 °C, gemischt und gegebenenfalls unter erhöhtem Druck zur Umsetzung gebracht. Die Vermischung kann mechanisch mittels eines Rührers, mittels einer Rührschnecke oder durch eine Hochdruckvermischung in einer Düse oder Mischkopf durchgeführt werden.

Das Aufschäumen gemäß dem erfindungsgemäßen Schritt (2) erfolgt anschließend durch Expansion des enthaltenen Treibmittels bei den gegebenen Reaktionsbedingungen. Das Aufschäumen kann in entsprechenden Formen erfolgen, um den erfindungsgemäßen Polyurethan-Hartschaumstoff in entsprechenden geometrischen Formen zu erhalten.

Die erfindungsgemäßen Polyurethan-Hartschaumstoffe weisen bevorzugt eine Dichte von 20 bis 200 kg/m³, vorzugsweise von 30 bis 100 kg/m³ und insbesondere von 35 bis 80 kg/m³ auf.

Die erfindungsgemäßen Polyurethan-Hartschaumstoffe weisen bevorzugt eine Druckfestigkeit größer als 0,10 N/mm²und eine Wärmeleitfähigkeit bei einer Mitteltemperatur von 23°C kleiner als 27 mW/m*K auf.

Erfindungsgemäß bevorzugt wird der erfindungsgemäße Polyurethan-Hartschaumstoff als Dämmung eingesetzt, bevorzugt als Rohrdämmung.

Die vorliegende Erfindung betrifft daher des Weiteren die Verwendung eines erfindungsgemäßen Polyurethan-Hartschaumstoffes zur Dämmung, bevorzugt zur Rohrdämmung.

Die vorliegende Erfindung betrifft auch ein gedämmtes Rohr, enthaltend einen erfindungsgemäßen Polyurethan-Hartschaumstoff.

Die Herstellung von gedämmten Rohren ist dem Fachmann allgemein geläufig. Beispielsweise kann die Herstellung derart erfolgen, dass man die erfindungsgemäße Zusammensetzung aus den Komponenten A und B zur Herstellung des Polyurethan-Hartschaumstoffes, bevorzugt kontinuierlich, in eine rohrförmig vorgeformte, gegebenenfalls mehrlagige, bevorzugt diffusionshemmende, Folie, die ein Mediumrohr mit einem zu füllenden Ringspalt umschließt, gefüllt wird, wobei die Komponenten A und B miteinander reagieren und das Reaktionsprodukt zur Ausbildung des Polyurethan-Hartschaumstoffes aufschäumt, und den von der Folie umgebenen Polyurethan-Hartschaumstoff, bevorzugt kontinuierlich, in einen Extruder, bevorzugt in einen Ringextruder, führt, und ein thermoplastisches Material auf die Folie extrudiert. Anschließend kann das gebildete gedämmte Rohr gekühlt werden, beispielsweise durch Durchführen durch ein kühlendes Wasserbad.

Die vorliegende Erfindung betrifft daher auch ein Verfahren zur Herstellung eines gedämmten Rohres, bevorzugt des erfindungsgemäßen gedämmten Rohres, enthaltend wenigstens einen erfindungsgemäßen Polyurethan-Hartschaumstoff, wobei die erfindungsgemäße Zusammensetzung aus den Komponenten A und B zur Herstellung des Polyurethan-Hartschaumstoffes, bevorzugt kontinuierlich, in eine rohrförmig vorgeformte, gegebenenfalls mehrlagige, bevorzugt diffusionshemmende, Folie, die ein Mediumrohr mit einem zu füllenden Ringspalt umschließt, gefüllt wird, wobei die Komponenten A und B miteinander reagieren und das Reaktionsprodukt zur Ausbildung des Polyurethan-Hartschaumstoffes aufschäumt, und der von der Folie umgebene Polyurethan-Hartschaumstoff, bevorzugt kontinuierlich, in einen Extruder, bevorzugt in einen Ringextruder, geführt wird, und ein thermoplastisches Material auf die Folie extrudiert wird.

Da aufgrund der hohen Flexibilität des erfindungsgemäßen Polyurethan-Hartschaumstoffes ein Aufwickeln der gedämmten Rohre leicht möglich ist, kann auf ein Stückeln der bevorzugt kontinuierlich hergestellten Rohre verzichtet werden. Es ist somit möglich, gedämmte Rohre mit einer Länge von mehr als 50 m, bevorzugt mehr als 200 m, insbesondere mehr als 400 m herzustellen.

Das Mediumrohr kann beispielsweise auf folgenden Materialien basieren: Metalle, insbesondere Kupfer, Edelstahl, unlegierter Stahl und Aluminium sowie Kunststoffe, insbesondere vernetztes Polyethylen (PEX). Die Wanddicke des Mediumrohres kann üblicherweise 0,5 mm bis 25 mm betragen. Der Gesamtdurchmesser des Mediumrohres beträgt im Allgemeinen 25 bis 1000 mm, bevorzugt 25 bis 400 mm. Der Polyurethan-Hartschaumstoff kann an dem Mediumrohr haften. Alternativ ist es möglich, auf die äußere Oberfläche des Mediumrohres übliche Trennmittel aufzutragen, die eine Haftung des Polyurethan-Hartschaumstoffes an dem Mediumrohr verhindern.

Das Mantelrohr kann beispielsweise auf folgenden Materialien basieren: thermoplastischen Kunststoffen, insbesondere HDPE und LDPE und Metallen, wie z.B. Wickelfalzblechen.

Das gedämmte Rohr kann nach Durchlaufen des kühlenden Wasserbades auf Trommeln mit einem Durchmesser grösser 1 m, besser grösser 1,5 m und am besten grösser 2 m aufgewickelt werden. Hierbei entstehen auf der Außenseite hohe Zug- und auf der Innenseite hohe Druckbelastungen, die von dem erfindungsgemäßen Polyurethan-Hartschaumstoff leicht getragen werden. Der erfindungsgemäße Polyurethan-Hartschaumstoff weist eine ausreichende Flexibilität auf, um der Zugbelastung standzuhalten und ausreichend Druckfestigkeit, um der Druckbelastung zu widerstehen.

Das Mantelrohr kann aus einer oder mehreren Schicht(en) bestehen, beispielsweise aus der eingangs dargestellten gegebenenfalls diffusionshemmenden, gegebenenfalls mehrlagigen, Folie, und einer weiteren, bevorzugt dickeren Schicht bevorzugt aus thermoplastischem Kunststoff. Die Gesamtdicke der Wand des Mantelrohres inklusive gegebenenfalls der Folie beträgt im Allgemeinen 1 mm bis 25 mm.

### Beispiele:

Es werden erfindungsgemäße Polyurethan-Hartschaumstoffe 1, 2, 3 und 4, sowie Vergleichs-Schaumstoffe V5, V6, V7 und V8 hergestellt. Die Isocyanate sowie die mit Isocyanat reaktiven Komponenten wurden zusammen mit den Treibmitteln, Katalysatoren und allen weiteren Zusatzstoffen bei einer Kennzahl von 120 ± 1 verschäumt. Die Verschäumung erfolgte mit einem Laborrührer mit einer Rührgeschwindigkeit von 1400 Umdrehungen pro Minute und einer Rührzeit von 10 Sekunden in einem Becher. Bei diesem sogenannten Bechertest werden die Reaktionszeiten und die frei geschäumte Rohdichte bestimmt. Weitere Messgrößen werden von Schaumkörpern bestimmt, die durch Ausgießen des im Becher verrührten Reaktionsgemisches in eine Kastenform mit den Abmessungen 200x200x70 mm³ erhalten werden.

Alle Rezepturen wurden mit einer Fadenziehzeit von 90 ± 10 s und einer freigeschäumten Rohdichte von 52 ± 3 g/l eingestellt.

### Messmethoden

Die Druckfestigkeiten und Druck-E-Module der Polyurethan-Hartschaumstoffe wurden nach DIN 53421/DIN EN ISO 604 gemessen.

Die Bestimmung der Wärmeleitfähigkeit erfolgte nach 24 Stunden Lagerung bei Normklima. Die Prüfkörper hatten die Abmessung 200x200x30 mm³. Die Wärmeleitfähigkeit wird dann mit einem Wärmestrommessplattengerät Hesto A50 bei einer Mitteltemperatur von 23 °C bestimmt.

Die Bestimmung der Geschlossenzelligkeit erfolgte mit Hilfe eines Gasverdrängungs-Pyknometers in Anlehnung an DIN EN ISO 4590.

Der 3 Punkt Biegeversuch erfolgte in Anlehnung an DIN 53423. Die Durchbiegung ist auf 30 mm begrenzt. Die Biegefestigkeit wurde beim Kraftmaximum berechnet. Die Durchbiegung beim Bruch ist die im Augenblick des Bruchs erreichte Durchbiegung in der Mitte des Prüflings.

Die Rezepturen und die Prüfergebnisse sind in Tabelle 1 dargestellt. Die Tabelle zeigt, dass durch die Verwendung eines erfindungsgemäßen PU-Hartschaums System die Durchbiegung bei Bruch und damit die Schaumflexibilität deutlich verbessert werden kann. Die Erhöhte Flexibilität konnte ohne Verschlechterung der Wärmeleitfähigkeit und Druckfestigkeit, die wichtigste Eigenschaften eines Polyurethan-Hartschaumsystems, erreicht werden.

**Tabelle 1**

| **Versuch** | **1** | **2** | **3** | **4** | **V5** | **V6** | **V7** | **V8** |
|---|---|---|---|---|---|---|---|---|
| | **Komponente A** | | | | | | | |
| Polyether a1 | 40 | 40 | 40 | 40 | 40 | 48,5 | 40 | 40 |
| Polyether a2 | 30 | 30 | 30 | 30 | 30 | 48,5 | 30 | 30 |
| Polyether a3 | 27 | 27 | 27 | 27 | 27 | - | 27 | 27 |
| Stabilisator | 2 | 2 | 2 | 2 | 2 | 2 | 2 | 2 |
| Wasser | 1 | 1 | 1 | 1 | 1 | 1 | 1 | 1 |
| Summe | 100 | 100 | 100 | 100 | 100 | 100 | 100 | 100 |
| DMCHA | 2,5 | 2 | 2 | 2 | 2 | 1,2 | 1,5 | 2 |
| Cyclopentan | 9 | 8,5 | 8,5 | 8 | 8,5 | 7,5 | 8 | 8 |

| | **Komponente B, Isocyanatindex 120 ± 1** | | | | | | | |
|---|---|---|---|---|---|---|---|---|
| Isocyanat 1 | - | 50 | - | - | - | 100 | 100 | - |
| Isocyanat 2 | - | - | 50 | - | 67 | - | - | 100 |
| Isocyanat 3 | 100 | 50 | 50 | - | 33 | - | - | - |
| Isocyanat 4 | - | - | - | 100 | | - | - | - |
| Summe | 100 | 100 | 100 | 100 | 100 | 100 | 100 | 100 |
| davon Prepolymer | 31 | 15,5 | 15,5 | 13 | 10,3 | 0 | 0 | 0 |

| | **Schaumstoff-Eigenschaften bei Kernrohrdichten 65 ± 6 kg/m³** | | | | | | | |
|---|---|---|---|---|---|---|---|---|
| **Druckversuch** | | | | | | | | |
| Druckfestigkeit (N/mm²) | nb | 0,235 | 0,223 | 0,251 | 0,266 | 0,227 | 0,243 | 0,224 |
| E-Modul (N/mm²) | 5,40 | 7,23 | 6,67 | 8,45 | 9,02 | 6,58 | 7,22 | 7,03 |

| **3-Punkt-Biegeversuch** | | | | | | | | |
|---|---|---|---|---|---|---|---|---|
| Biegefestigkeit (N/mm²) bei Durchbiegung (mm) | 0,39 21,5 | 0,44 21,0 | 0,37 21,8 | 0,52 17,1 | 0,54 16,4 | 0,52 18,4 | 0,44 15,4 | 0,37 15,9 |
| Durchbiegung bei Bruch (mm) | 26,3 | 24,3 | 27,0 | 23,0 | 18,0 | 18,0 | 15,3 | 17,0 |
| Geschlossen-zelligkeit (%) | 90 | 91 | 89 | 90 | 91 | 92 | 89 | 89 |
| Wärmeleit-fähigkeit (mW/m*K) | 23,0 | 23,2 | 23,4 | 24,8 | 25,0 | 23,4 | 23,4 | 25,5 |

Falls nicht anders angegeben, sind die Werte in Gew.-% angegeben.

Es wurden die folgenden Komponenten eingesetzt:
- Polyether a1:: gestartet mit Glycerin, alkoxyliert mit PO/EO, OH-Zahl 35 mg KOH/g, Funktionalität 2,7, mittleres Molekulargewicht 4350 g/mol
- Polyether a2:: gestartet mit TDA (Toluylendiamin), alkoxyliert mit EO und PO, OH-Zahl 390 mg KOH/g, Funktionalität 3,8, mittleres Molekulargewicht 530 g/mol
- Polyether a3:: gestartet mit Saccharose, Pentaerythrit und Diethylenglykol, alkoxyliert mit PO, OH-zahl 403 mg KOH/g, Funktionalität 3,9, mittleres Molekulargewicht 545 g/mol
- Stabilisator:: Polysiloxan Stabilisator (L 6900 der Fa. Momentive)
- DMCHA:: Dimethylcyclohexylamin
- Isocyanat 1:: IsoPMDI 92140 der BASF SE, Mischung von 4,4'-Diphenylmethandiisocyanat mit höherfunktionellen Oligomeren und Isomeren, mit einem NCO-Gehalt von 31,5% und einer mittleren Funktionalität von ca. 2,7
- Isocyanat 2:: carbodiimid modifiziertes 4,4' mMDI, mit einem NCO-Gehalt von 29,5% und einer mittleren Funktionalität von 2,2
- Isocyanat 3:: Quasi Prepolymer aus 4,4' mMDI, Dipropylenglykol und Polypropylenglykol (OH-Zahl 250 mg KOH/g), mit einem NCO-Gehalt von 22,9% und einer mittlere Funktionalität von 2,05; der Gehalt an Prepolymer ist 31%.
- Isocyanat 4:: Quasi Prepolymer aus 4,4' mMDI, pMDI und Polypropylenglykol (OH-Zahl 250 mg KOH/g) mit einem NCO-Gehalt von 28,5% und einer mittleren Funktionalität von 2,4; der Gehalt an Prepolymer ist 13%.

## Patentansprüche

1. Zusammensetzung zur Herstellung eines Polyurethan-Hartschaumstoffes, mindestens enthaltend:
(A) mindestens ein Polyol mit einem Molekulargewicht von mindestens 1700 g/mol und mindestens ein Treibmittel als Komponente A und
(B) mindestens ein Polyisocyanat als Komponente B,
**dadurch gekennzeichnet, dass** das mindestens eine Polyisocyanat B 11 bis 39,5 Gew.-% eines Polyisocyanat-Prepolymers, basierend auf wenigstens einem Polyetherpolyol mit einer OH-Zahl von wenigstens 100 mg KOH/g, enthält.

2. Zusammensetzung nach Anspruch 1, **dadurch gekennzeichnet, dass** Komponente A mindestens ein Polyol enthält, dass auf einer Verbindung ausgewählt aus der Gruppe bestehend aus Alkoholen, Zuckerverbindungen, Aminen, Kondensationsprodukten aus wenigstens einem Amin, wenigstens einer aromatischen Verbindung und Formaldehyd, und Mischungen davon, basiert.

3. Zusammensetzung nach Anspruch 1 oder 2, **dadurch gekennzeichnet, dass** das Treibmittel Cyclopentan oder eine Mischung enthaltend Cyclopentan ist.

4. Zusammensetzung nach einem der Ansprüche 1 bis 3, **dadurch gekennzeichnet, dass** in Komponente A eine Polyetherolmischung vorliegt, enthaltend mindestens ein Polyetherol a1 basierend auf mindestens einem dreiwertigen Alkohol und mindestens ein Polyetherol a2 basierend auf mindestens einem Amin.

5. Zusammensetzung nach einem der Ansprüche 1 bis 4, **dadurch gekennzeichnet, dass** in Komponente A eine Polyetherolmischung vorliegt, enthaltend mindestens ein Polyetherol a1 basierend auf mindestens einem dreiwertigen Alkholol, mindestens ein Polyetherol a2 basierend auf mindestens einem Amin und mindestens ein Polyetherol a3 basierend auf mindestens einer Zuckerverbindung.

6. Zusammensetzung nach einem der Ansprüche 1 bis 5, **dadurch gekennzeichnet, dass** der Polyisocyanatindex 80 bis 150 beträgt.

7. Zusammensetzung nach einem der Ansprüche 1 bis 6, **dadurch gekennzeichnet, dass** in Komponente A zusätzlich mindestens ein Additiv ausgewählt aus der Gruppe bestehend aus Kettenverlängerungsmitteln, Vernetzern, Stabilisatoren, Katalysatoren, oberflächenaktiven Substanzen, Schaumstabilisatoren, Zellreglern, Füllstoffen, Farbstoffen, Pigmenten, Flammschutzmitteln, Antistatika, Hydrolyseschutzmitteln und/oder fungistatisch und bakteriostatisch wirkenden Substanzen und Mischungen davon, vorliegt.

8. Polyurethan-Hartschaumstoff, erhältlich durch Umsetzung einer Zusammensetzung gemäß einem der Ansprüche 1 bis 7.

9. Verfahren zur Herstellung eines Polyurethan-Hartschaumstoffes nach Anspruch 8 aus einer Zusammensetzung nach einem der Ansprüche 1 bis 7, umfassend mindestens die Schritte:
(1) Inkontaktbringen der Komponenten A und B, um ein Reaktionsprodukt zu erhalten, und
(2) Aufschäumen des in Schritt (1) erhaltenen Reaktionsproduktes.

10. Verwendung eines Polyurethan-Hartschaumstoffes nach Anspruch 8 zur Dämmung.

11. Verwendung nach Anspruch 10, **dadurch gekennzeichnet, dass** es eine Rohrdämmung ist.

12. Gedämmtes Rohr, enthaltend einen Polyurethan-Hartschaumstoff nach Anspruch 8.

13. Verfahren zur Herstellung eines gedämmten Rohres, enthaltend wenigstens einen Polyurethan-Hartschaumstoff nach Anspruch 8, **dadurch gekennzeichnet, dass** die Zusammensetzung aus den Komponenten A und B zur Herstellung des Polyurethan-Hartschaumstoffes gemäß einem der Ansprüche 1 bis 7 in eine rohrförmig vorgeformte Folie, die ein Mediumrohr mit einem zu füllenden Ringspalt umschließt, gefüllt wird, wobei die Komponenten A und B miteinander reagieren und das Reaktionsprodukt zur Ausbildung des Polyurethan-Hartschaumstoffes aufschäumt, und der von der Folie umgebene Polyurethan-Hartschaumstoff in einen Extruder geführt wird, und ein thermoplastisches Material auf die Folie extrudiert wird.

## Claims

1. A composition for producing a rigid polyurethane foam at least comprising:
(A) at least one polyol having a molecular weight of not less than 1700 g/mol and at least one blowing agent as component A, and
(B) at least one polyisocyanate as component B,
wherein the at least one polyisocyanate B comprises from 11 to 39.5 wt% of a polyisocyanate prepolymer, based on at least one polyether polyol having an OH number of at least 100 mg KOH/g.

2. The composition according to claim 1 wherein component A comprises at least one polyol based on a compound selected from the group consisting of alcohols, sugar compounds, amines, condensation products of at least one amine, at least one aromatic compound and formaldehyde, and mixtures thereof.

3. The composition according to claim 1 or 2 wherein the blowing agent is cyclopentane or a mixture comprising cyclopentane.

4. The composition according to any of claims 1 to 3 wherein component A comprises a polyetherol mixture comprising at least one polyetherol a1 based on at least one trihydric alcohol, and at least one polyetherol a2 based on at least one amine.

5. The composition according to any of claims 1 to 4 wherein component A comprises a polyetherol mixture comprising at least one polyetherol a1 based on at least one trihydric alcohol, at least one polyetherol a2 based on at least one amine and at least one polyetherol a3 based on at least one sugar compound.

6. The composition according to any of claims 1 to 5 wherein the polyisocyanate index is in the range from 80 to 150.

7. The composition according to any of claims 1 to 6 wherein component A further comprises at least one additive selected from the group consisting of chain extenders, crosslinkers, stabilizers, catalysts, surfaceactive substances, foam stabilizers, cell regulators, fillers, dyes, pigments, flame retardants, antistats, hydrolysis control agents and/or fungistatically and bacteriostatically active substances and mixtures thereof.

8. A rigid polyurethane foam obtainable by reacting a composition according to any of claims 1 to 7.

9. A process for producing a rigid polyurethane foam according to claim 8 from a composition according to any of claims 1 to 7, comprising at least the steps of:
(1) contacting components A and B to obtain a reaction product, and
(2) foaming up the reaction product obtained in step (1).

10. The use of a rigid polyurethane foam according to claim 8 for insulation.

11. The use according to claim 10 comprising pipe insulation.

12. An insulated pipe comprising a rigid polyurethane foam according to claim 8.

13. A process for producing an insulated pipe comprising at least one rigid polyurethane foam according to claim 8, wherein the composition comprising components A and B for producing the rigid polyurethane foam according to any of claims 1 to 7 is filled into a tubularly preshaped film surrounding a media pipe with an annular gap to be filled, with components A and B reacting with one another and the reaction product foaming to form the rigid polyurethane foam, and the rigid polyurethane foam surrounded by the film is led into an extruder, and a thermoplastic material is extruded onto the film.

## Revendications

1. Composition pour la fabrication d'une mousse dure de polyuréthane, contenant au moins :
(A) au moins un polyol ayant un poids moléculaire d'au moins 1 700 g/mol et au moins un agent gonflant en tant que composant A, et
(B) au moins un polyisocyanate en tant que composant B,
**caractérisée en ce que** ledit au moins un polyisocyanate B contient 11 à 39,5 % en poids d'un prépolymère de polyisocyanate, à base d'au moins un polyéther-polyol ayant un indice OH d'au moins 100 mg KOH/g.

2. Composition selon la revendication 1, **caractérisée en ce que** le composant A contient au moins un polyol, qui est à base d'un composé choisi dans le groupe constitué par les alcools, les composés de sucres, les amines, les produits de condensation d'au moins une amine, d'au moins un composé aromatique et de formaldéhyde, et leurs mélanges.

3. Composition selon la revendication 1 ou 2, **caractérisée en ce que** l'agent gonflant est le cyclopentane ou un mélange contenant du cyclopentane.

4. Composition selon l'une quelconque des revendications 1 à 3, **caractérisée en ce qu'**un mélange de polyétherols est présent dans le composant A, contenant au moins un polyétherol a1 à base d'au moins un alcool trivalent et au moins un polyétherol a2 à base d'au moins une amine.

5. Composition selon l'une quelconque des revendications 1 à 4, **caractérisée en ce qu'**un mélange de polyétherols est présent dans le composant A, contenant au moins un polyétherol a1 à base d'au moins un alcool trivalent, au moins un polyétherol a2 à base d'au moins une amine et au moins un polyétherol a3 à base d'au moins un composé de sucre.

6. Composition selon l'une quelconque des revendications 1 à 5, **caractérisée en ce que** l'indice du polyisocyanate est de 80 à 150.

7. Composition selon l'une quelconque des revendications 1 à 6, **caractérisée en ce qu'**au moins un additif choisi dans le groupe constitué par les agents d'allongement de chaîne, les agents de réticulation, les stabilisateurs, les catalyseurs, les substances tensioactives, les stabilisateurs de mousse, les régulateurs cellulaires, les charges, les colorants, les pigments, les agents ignifuges, les antistatiques, les agents de protection contre l'hydrolyse et/ou les substances à effet fongistatique et bactériostatique et leurs mélanges est en outre présent dans le composant A.

8. Mousse dure de polyuréthane, pouvant être obtenue par mise en réaction d'une composition selon l'une quelconque des revendications 1 à 7.

9. Procédé de fabrication d'une mousse dure de polyuréthane selon la revendication 8 à partir d'une composition selon l'une quelconque des revendications 1 à 7, comprenant au moins les étapes suivantes :
(1) la mise en contact des composants A et B pour obtenir un produit de réaction, et
(2) le moussage du produit de réaction obtenu à l'étape (1).

10. Utilisation d'une mousse dure de polyuréthane selon la revendication 8 pour l'isolation.

11. Utilisation selon la revendication 10, **caractérisée en ce qu'**il s'agit d'une isolation de tube.

12. Tube isolé, contenant une mousse dure de polyuréthane selon la revendication 8.

13. Procédé de fabrication d'un tube isolé, contenant au moins une mousse dure de polyuréthane selon la revendication 8, **caractérisé en ce que** la composition des composants A et B pour la fabrication de la mousse dure de polyuréthane selon l'une quelconque des revendications 1 à 7 est placée dans un film tubulaire préformé qui entoure un tube de milieu avec un espace annulaire à remplir, les composants A et B réagissant l'un avec l'autre et le produit de réaction moussant pour former la mousse dure de polyuréthane, et la mousse dure de polyuréthane entourée par le film est introduite dans une extrudeuse, et un matériau thermoplastique est extrudé sur la feuille.
